Europäisches Patentamt

European Patent Office

Office européen des brevets

(19)

(11) Publication number: **0 019 356**
**B1**

(12) **EUROPEAN PATENT SPECIFICATION**

(45) Date of publication of patent specification: **08.06.83**

(51) Int. Cl.³: **A 61 C 5/02**

(21) Application number: **80301161.8**

(22) Date of filing: **10.04.80**

(54) An endodontic instrument and a method of making it.

(30) Priority: **17.05.79 US 39927**

(43) Date of publication of application:
**26.11.80 Bulletin 80/24**

(45) Publication of the grant of the patent:
**08.06.83 Bulletin 83/23**

(84) Designated Contracting States:
**AT BE CH DE FR GB IT LI NL SE**

(56) References cited:
**DE - C - 105 855**
**DE - C - 357 862**
**DE - C - 949 002**

(73) Proprietor: **SYBRON CORPORATION**
**1100 Midtown Tower**
**Rochester, NY 14604 (US)**

(72) Inventor: **Groves, William Albert**
**3201 Dale View Drive**
**Ann Arbor Michigan (US)**
Inventor: **Lentine, Frank Nickolis**
**10112 Gulley**
**Taylor Michigan (US)**

(74) Representative: **Oliver, Roy Edward et al,**
**POLLAK,MERCER & TENCH High Holborn House**
**52-54 High Holborn**
**London WC1V 6RY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

An endodontic instrument and a method of making it

The present invention relates to endodontic instruments and is more particularly concerned with improvements in endodontic cutting instruments of the kind used in dentistry by being manually operated to clean and enlarge the root canals of teeth. The invention is concerned in particular with endodontic instruments of this general kind which comprise an elongated tapered flexible rod, which has a tetragonal cross-section, having spiral side faces defining spiral edges between them. These spiral side faces are substantially straight in cross-section and are formed by axially twisting an elongated tapered blank, from which the instrument is made.

There are three main types of endodontic instrument in use, namely, the endodontic file or so-called K-file, the endodontic reamer and the Hedstrom file. These three kinds of instrument have different features of construction and consequently have different advantages and disadvantages.

The endodontic file or K-file consists essentially of a ground tapered rod of square cross-section, which in manufacture is axially twisted to form the instrument. The cross-section of the instrument at any point retains the square shape of the original tapered rod. This twisting provides the instrument with four spiral cutting edges. A dental instrument of this general kind is described in DE—C—357,862 and US—A—1,307,446, wherein the cutting edges may have a sharper angle on the upper side, i.e. towards the tip, than on the lower side. This makes the cutting action most effective as the instrument is pulled out of a tooth root canal.

The K-file is generally considered to be the strongest of the three types of instrument and is used as a file, by being inserted into the root canal of a tooth and then being longitudinally reciprocal, i.e. along its main axis, to remove pulp from the root canal. As with all such instruments, the K-file is extremely fine and is sufficiently flexible to follow any curvature of the root canal.

The second type, which may be regarded essentially as an endodontic reamer, takes the form of a ground tapered rod of triangular cross-section. This rod is also twisted in manufacture of the instrument so that the twisting provides the instrument with three spiral cutting edges, the rod retaining its essentially equilateral triangular cross-section at each point along its length. This type of instrument is generally considered to be the best cutting instrument and is used primarily by the dentist as a reamer, by being inserted into the root canal and then being rotated or twisted about its main axis, so as to ream or enlarge the canal.

The third known type of instrument is the Hedstrom file, which essentially consists of a tapered rod, initially of a round or circular cross-section, which is then fluted by grinding along the taper in a helical pattern to form the finished instrument, which has essentially a saw-tooth profile in longitudinal cross-section. The Hedstrom file is generally considered to be the weakest of the three instruments, but it is also considered to have the best debris removal characteristics of the three types.

Each of these three known types of instruments represents a compromise from an ideal instrument. For example, the K-file or square-section instrument is strong, but has poorer cutting characteristics than the triangular-section reamer instrument and does not have the debris removal characteristics of the Hedstrom file. The reamer or triangular-section instrument has good cutting characteristics, but is not as strong as the K-file and does not have the debris removal characteristics of the Hedstrom file. The Hedstrom file has the best debris removal characteristics of the three instruments and a cutting ability between that of the square and triangular instruments, but is the weakest of the three instruments.

It has now been discovered that an improved form of endodontic instrument can be made, essentially using materials and manufacturing techniques known in making existing endodontic instruments, which, however, combines the best features of each of the three standard types of instrument, by being strong whilst also having good cutting characteristics and good debris removal characteristics.

According to one aspect of this invention, an improved endodontic instrument of the kind mentioned initially is characterised in that the spiral faces define between them at least one obtuse angle in the range from 105° to 120° and at least one acute angle in the range from 60° to 75°, the spiral edge corresponding to the or each acute angle having cutting properties.

According to another aspect of this invention, a method of making an endodontic instrument, wherein an elongated tapered metal blank with a tetragonal cross-section over at least a portion of its length is axially twisted to provide four spiral edges located on the diagonals is characterised in that the blank is ground to a parallelogram cross-section with two obtuse angles in the range from 105° to 120° and that one end of the resultant rod is fixed to a handle for manipulating the instrument.

Preferably, the tapered blank is axially twisted through from 8 to 20 full revolutions.

It can be seen that the endodontic instrument of the present invention may be characterised in that its file or reamer portion is manufactured by twisting an elongated tapered parallelogram-section ground bar, the two obtuse angles of the parallelogram being in the range from 105° to 120°. This configuration

**0019356**

when twisted provides a file with a major diameter approximately corresponding to the long diagonal of the parallelogram and a minor diameter corresponding generally to the short diagonal of the parallelogram. The spiral cutting edges formed when the bar is twisted extend only along the ends of the major diameter of the file and thus are the acute-angled spiral edges produced on the instrument.

The cross-section of any form of instrument according to this invention thus differs from known endodontic instruments, the cross-section preferably being a rhomboid or a rhombus; other cross-sections which provide the benefits of the invention include a trapezium and a "kite" cross-section, the former having a vicinal pair of obtuse angles and a similar pair of acute angles and the latter having an acute angle opposite an obtuse angle or a right-angle, the other two angles respectively being right-angles or obtuse angles. A particular characterisation of the preferred shape of an endodontic instrument of the invention may be expressed in that the four spiral edges are arranged in opposed pairs relative to the axis of the rod, the diametrical distance between one pair being greater than the diametrical distance between the other pair, the first pair of edges being cutting edges of the instrument and the other pair of edges being non-cutting edges. Preferably, in this or any other embodiment of the invention, a handle is included and has the rod extending from it; the other pair of edges desirably define debris-removal edges.

Figure 1 is a perspective view showing a parallelogram-section ground axially-tapering rod from which the preferred form of endodontic instrument of the present invention is made;

Figure 2 is a view similar to Figure 1, showing a different configuration of the rod; ·

Figure 3 is a side elevation view showing the finished endodontic instrument of the invention;

Figure 4 is a view on an enlarged scale of a portion of the instrument shown in Figure 3; and

Figure 5 is a view similar to Figure 4, showing the prior art instrument.

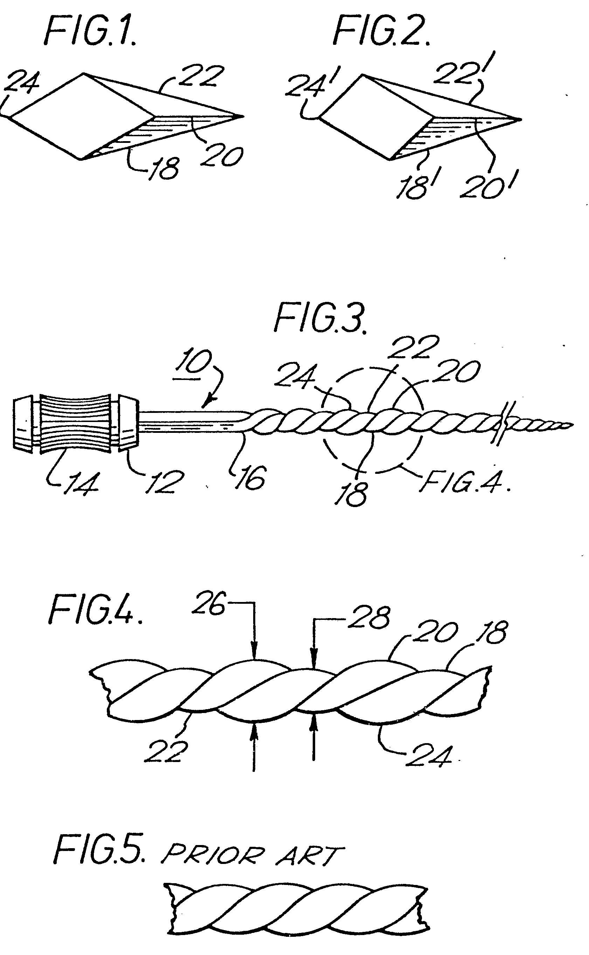

Referring to the drawings, Figure 3 shows a complete endodontic instrument generally indicated at 10. The instrument 10 includes a handle 12 which has a contoured and shaped portion 14 to facilitate manipulation of the instrument 10 between the thumb and forefinger of the user. Extending axially from the handle 12 is an elongated tapered file or reamer 16. This file or reamer 16 is made by first grinding an elongated tapered rod to the shape of a parallelogram in cross-section. This cross-section preferably is either an equilateral parallelogram, i.e. a rhombus in cross-section, having two acute and two obtuse angles and all four sides equal, as shown in Figure 1, or a rhomboid in cross-section, wherein only the opposite pairs of sides of the parallelogram are equal. It has been found that, for best results, the acute angles of the parallelogram should be in the range from about 60° to 75° and the obtuse angles should be in the range from about 105° to 120°.

After the rod has been ground to the appropriately shaped cross-section, the ground blank is axially twisted anywhere from 8 or 10 to 20 or more full turns. This provides the file 16 with four spiral edges respectively corresponding to the edges 18, 20, 22 and 24 of the blank or rod from which the file or reamer 16 is made, such edges 18—24 being indicated in Figure 1. After the blank has been twisted, it is attached to the handle 12 by any suitable means well known in the art to provide the complete endodontic instrument.

The unique feature of the instrument 10 of the present invention provided by twisting a rod having a parallelogram cross-section is apparent from Figure 4. In this respect, the resultant spiral edges 18, 20, 22 and 24 are arranged in two opposed pairs. The first pair is formed by the edges 20 and 24 and the second pair is formed by the edges 18 and 22. The pair of edges 20, 24 constitute the ends of the major diameter 26 of the twisted blank and thus correspond to the major diagonal of the blank before twisting, whilse the other pair of edges 18, 22 constitute the ends of the minor diameter 28 of the twisted blank and thus correspond to the major diagonal of the untwisted blank. These major and minor diameters thus correspond generally to the long and short diagonals respectively of the parallelogram cross-section. The major and minor diameters alternate, with the number of diameters presented in any aspect being dependent upon the length of the instrument and the number of times which the blank is twisted. In any event, the spiral edges 20, 24 defining the larger diameter sections provide the cutting edges, whereas the second pair of alternating edges 18, 22 defining the reduced diameter sections provide a retaining and debris-removal function during operation of the instrument.

It has been found that an endodontic instrument in accordance with the present invention has a strength which meets the specifications of the American Dental Association. While they do not have the strength of comparable K-files (i.e. of square cross-section), the instruments of the present invention (i.e. of oblique parallelogram cross-section) do have better twist strength and stiffness than comparable sized reamers (triangular cross-section) or Hedstrom files.

Tests for the strength of endodontic instruments are fairly standardized and include tests for both twist strength and stiffness. Briefly, the procedure for determining twist strength involved holding the handle end of the instrument in a fixed position, while the pointed or working end is rotated axially in a direction opposite to the normal twist of the instrument.

For example, in endodontic instruments having counter-clockwise twist or spiral, the test would be conducted by rotating the pointed or working end clockwise.

Rotation continues until the instrument breaks. Both the torque (gm.cm) and angular deflection in degrees at the breaking point are taken as a measure of the twist strength of the instrument.

Stiffness of the instrument is tested by holding the instrument fixed by its pointed or working end. A sideways force is then exerted to bend the instrument about the fixed end. The torque values needed to bend the instrument by 45° and by 90° are a measure of its stiffness.

Table I below compares both the twist strength and stiffness of an instrument of the present invention, in particular one with a rhombus cross-section, to a comparable sized K-file (square cross-section), reamer (triangular cross-section) and Hedstrom file (circular cross-section).

TABLE I

|  | Rhombus | Hedstrom | K-File | Reamer |
|---|---|---|---|---|
| Twist Strength |  |  |  |  |
| Torque (gm.cm) | 59.7 | 43.3 | 75.9 | 50.2 |
| Angular Deflection | 895.1° | 438.1° | 686.4° | 848.8° |
| Stiffness |  |  |  |  |
| Torque at 45° | 65.4 | 40.8 | 102.2 | 44.9 |
| Torque at 90° | 68.6 | 43.4 | 104.5 | 46.8 |

Table I above shows that the endodontic instrument of the present invention has a twist strength which is higher than that of either the reamer or the Hedstrom file and also is more flexible (less stiff) than the K-file.

There is no generally accepted standardized test to determine the cutting efficiency of endodontic instruments. Accordingly, a simple test was designed to obtain empirical data to support the claim made hereinabove that the instrument of the present invention has superior cutting ability over the reamers and K-files of the prior art. In the test, a pre-cast curved canal was moulded in a plastics block. Endodontists were asked to open these canals with each of three instruments, namely an instrument which unknown to the endodontist had a rhombic cross-section according to the present invention, a standard K-file and a reamer both the latter being of comparable size to the instrument of rhombic cross-section. Upon being asked to compare the cutting characteristics of each instrument, 28 of 30 endodontists making the comparison chose the rhombic shaped instrument as being far superior in cutting, material removal and flexibility than either the K-file or reamer.

Thus, it should be appreciated that the present invention does provide a superior endodontic instrument which combines the favourable characteristics of each prior art instrument. In this respect, the instrument of the present invention is more flexible than a conventional K-file, has a greater twist strength than the conventional reamer or Hedstrom file and can be said to rank above either the K-file or reamer in cutting ability.

Claims

1. An endodontic instrument, comprising an elongated tapered flexible rod with a tetragonal cross-section, having spiral side faces defining spiral edges between them, which are formed by axially twisting an elongated tapered blank, the spiral side faces being substantially straight in cross-section, characterised in that the spiral side faces define between them at least one obtuse angle in the range from 105° to 120° and at least one acute angle in the range from 60° to 75°, the spiral edge corresponding to the or each acute angle having cutting properties.

2. An endodontic instrument according to claim 1, wherein the tetragonal cross-section of the rod is an oblique parallelogram.

3. An endodontic instrument according to claim 2, wherein the tapered blank is axially twisted through from 8 to 20 full revolutions.

4. A method of making an endodontic instrument, wherein an elongated tapered metal blank with a tetragonal cross-section over at least a portion of its length is axially twisted to provide four spiral edges located on the diagonals, characterised in that the blank is ground to a parallelogram cross-section with two obtuse angles in the range from 105° to 120° and that one end of the resultant rod is fixed to a handle for manipulating the instrument.

5. A method according to claim 4, wherein the grinding is effected so as to provide the blank with a rhomboid cross-section.

## Revendications

1. Instrument endodontique, comprenant une tige allongée conique flexible à section transversale quadrangulaire qui comporte des faces latérales hélicoïdales définissant entre elles des bords hélicoïdaux obtenus par torsion axiale d'une ébauche allongée conique, les faces latérales hélicoïdales étant sensiblement droites en section transversale, caractérisé en ce que les faces latérales hélicoïdales définissent entre elles au moins un angle obtus compris entre 105° et 120° et au moins un angle aigu compris entre 60° et 75°, le bord hélicoïdal qui correspond à l'angle aigu, ou à chaque angle aigu, ayant des propriétés de coupe.

2. Instrument endodontique suivant la revendication 1, caractérisé en ce que la section quadrangulaire de la tige est un parallèlogramme oblique.

3. Instrument endodontique suivant la revendication 2, caractérisé en ce que l'ébauche conique est tordue axialement de 8 à 20 tours complets.

4. Procédé de fabrication d'un instrument endodontique, dans lequel une ébauche allongée conique métallique à section transversale quadrangulaire sur au moins une partie de sa longueur est tordue axialement de façon à obtenir quatre bords hélicoïdaux situés sur les diagonales, caractérisé en ce que l'ébauche est meulée à une section en parallèlogramme comportant deux angles obtus compris entre 105° et 120° et en ce qu'une extrémité de la tige résultante est fixée à une poignée pour la manipulation de l'instrument.

5. Procédé suivant la revendication·4, caractérisé en ce que le meulage est effectué de manière à donner à l'ébauche une section rhomboïdale.

## Patentansprüche

1. Endodontisches Instrument mit einer langgestreckten, sich verjüngenden Stange mit einem viereckigen Querschnitt, die spiralige Seitenflächen aufweist, die zwischen einander spiralige Kanten definieren, die durch axiales Verdrehen eines langgestreckten, sich verjüngenden Rohlings gebildet sind, wobei die spiraligen Seitenflächen im Querschnitt im wesentlichen gerade sind, dadurch gekennzeichnet, daß die spiraligen Seitenflächen zwischen einander wenigstens einen stumpfen Winkel im Bereich von 105° bis 120° und wenigstens einen spitzen Winkel im Bereich von 60° bis 70° bilden, wobei die spiralige Kante, die dem oder jedem spitzen Winkel zugeordnet ist, Schneideigenschaften aufweist.

2. Endodontisches Instrument nach Anspruch 1, bei dem der viereckige Querschnitt der Stange ein schiefes Parallelogramm ist.

3. Endodontisches Instrument bei dem der sich verjüngende Rohling axial durch 8 bis 20 volle Umdrehungen verdreht ist.

4. Verfahren zur Herstellung eines endodontischen Instrumentes, bei dem ein langgestreckter, sich verjüngender metallischer Rohling mit einem viereckigen Querschnitt über wenigstens einen Abschnittseiner Länge axial verdreht wird, um vier an den Diagonalen angeordnete spiralige Kanten zu bilden, dadurch gekennzeichnet, daß der Rohling zu einem Parallelogrammquerschnitt mit zwei stumpfen Winkeln, die im Bereich von 105° bis 120° liegen, geschliffen wird und daß ein Ende der resultierenden Stange an einem Handgriff zur Handhabung des Instrumentes befestigt wird.

5. Verfahren nach Anspruch 4, bei dem der Schliefvorgang so durchgeführt wird, daß der Rohling mit einem Rhomboidquerschnitt versehen wird.

FIG.1.

FIG.2.

FIG.3.

FIG.4.

FIG.5. PRIOR ART